# EUROPÄISCHE PATENTSCHRIFT

(11) **EP 2 609 272 B1**
(45) Veröffentlichungstag und Bekanntmachung des Hinweises auf die Patenterteilung: **01.03.2017**
(21) Anmeldenummer: 11764458.3
(22) Anmeldetag: 24.08.2011
(51) Int. Cl.: E05F 5/02, E05F 5/00, E05F 5/10

(54) **Möbelscharnier**
Furniture hinge
Charnière pour des meubles

(30) Priorität: 27.08.2010 AT 14382010
(43) Veröffentlichungstag der Anmeldung: 03.07.2013
(73) Patentinhaber: Julius Blum GmbH, 6973 Höchst (AT)
(72) Erfinder: BRUNNMAYR, Harald, A-6912 Hörbranz (AT)
(74) Vertreter: Torggler & Hofinger Patentanwälte
(86) Internationale Anmeldenummer: PCT/AT2011/000353
(87) Internationale Veröffentlichungsnummer: WO 2012/024711

(56) Entgegenhaltungen:
- WO-A1-2008/104009
- WO-A1-2009/003458
- US-A- 1 704 217
- US-A- 2 814 067
- US-A- 5 269 043

## Beschreibung

Die Erfindung betrifft ein Möbelscharnier mit einem Möbeldämpfer gemäß dem Oberbegriff des Anspruchs 1.

Ein Möbelbeschlag mit einem Möbeldämpfer zur Dämpfung eines bewegbar gelagerten Möbelteils, wobei eine Dämpfwirkung durch eine Bewegung eines Kolbens in einer Fluidkammer erfolgt, ist in der WO 2009/003458 gezeigt, wobei eine bewegbar gelagerte Dichtung mittels einer Feder, die sich an der Bodenplatte der Fluidkammer aufstützt beaufschlagt ist. Die Feder dient dabei zur Führung der bewegbar gelagerten Dichtung und ist mittels Vorsprüngen sowohl an der Dichtung als auch an der Bodenplatte gehalten. Im Zwischenbereich weist die Feder einen konstanten Querschnitt auf und nimmt das ganze Innere des Gehäuses, in dem die Fluidkammer angeordnet ist, auf, um eine möglichst stabile Führung der Dichtung zu ermöglichen. Der Nachteil eines derartigen Möbelbeschlags ist, dass durch die Art der Feder und durch die Vorsprünge viel Platz in Anspruch genommen und der Bewegungsbereich der Dichtung beschränkt wird, wodurch ein Einsatz nur für große Möbelbeschläge, wo genügend Raum vorhanden ist, denkbar ist. Die Vorteile einer bewegbar gelagerten Dichtung, wie sie in der GB 565 630 beschrieben werden, können dabei nicht für jede Art von Möbelbeschlägen zum Zug kommen.

Aufgabe der vorliegenden Erfindung ist es daher, ein Möbelscharnier mit einem Möbeldämpfer der eingangs erwähnten Gattung, der die oben genannten Nachteile vermeidet, zur Verfügung zu stellen.

Dies wird durch ein Möbelscharnier mit einem Möbeldämpfer mit den Merkmalen des Anspruchs 1 gelöst.

Ein Möbelscharnier mit einem Möbeldämpfer der eingangs erwähnten Art hat die Vorteile, durch die relativ zueinander bewegbar gelagerten Anschlagelemente der Dichtungsvorrichtung zusätzlichen Raum für den Dämpfungshub an sich und als Volumensausgleich im Verlauf eines Dämpfungsvorgangs zur Verfügung zu stellen, wenn eine Relativbewegung zwischen Fluidkammer und Kolben erfolgt und dabei ein Fluid das beispielsweise als eine Dämpfungsflüssigkeit, wie z.B. Silikonöl durch dafür vorgesehene Durchtrittsöffnungen von einem ersten Bereich der Fluidkammer in einen zweiten Bereich der Fluidkammer gepresst wird. Die Dämpfwirkung entsteht durch den Widerstand der sich der Fluidbewegung durch die Durchtrittsöffnungen entgegenstellt, wie bei einem üblichen Fluiddämpfer. Das erste und das zweite Anschlagelement sind von der zwischen den Anschlagelementen angeordneten Feder beaufschlagt, sodass in Folge einer Relativbewegung der Anschlagelemente eine Kompression oder Dehnung der Feder erfolgt und die relativ zueinander bewegbar gelagerten Anschlagelemente wieder in ihre Ausgangsposition rückgestellt werden.

Darüber hinaus können durch die federbeaufschlagte Dichtungsvorrichtung der Beginn und das Ende des Dämpfungsvorgangs weniger ruckartig und sanfter eingeleitet werden. Die Kennlinie der Dämpfung des Dämpfers an sich, die sich durch die erzeugte Dämpfungskraft während einer Dämpfung ergibt, wird durch die bewegbar gelagerte Dichtung glatter.

Erfindungsgemäß ist nun vorgesehen, dass die Feder zwischen dem ersten und zweiten Anschlagelement im Wesentlichen bis auf Querschnittstärke der Feder bzw. der Federwicklungen komprimierbar ist, wodurch sich mehr Dämpfungsweg bei gleicher Baugröße bzw. insgesamt die Baugröße des Möbeldämpfers insgesamt im Vergleich zu Möbeldämpfern des Standes der Technik reduziert ist, da bei gegebenem zusätzlichem Ausgleichsvolumen durch die bewegbar gelagerte Dichtungsvorrichtung, das sich durch die Dehnung und Kompression der Feder aus ihrer Nulllage ergibt, das erste und zweite Anschlagelement aufgrund der erfindungsgemäßen Art der Feder bis zu einem geringeren gegenseitigen Abstand komprimierbar sind. Dadurch fällt die Bauhöhe der Dichtungsvorrichtung geringer als im Stand der Technik aus. Unter der Querschnittsstärke der Feder bzw. der Federwicklungen wird der Querschnittdurchmesser des Federdrahtes oder des Federbands, aus dem die Feder bzw. die Federwicklung besteht, verstanden.

Darüber hinaus ist es möglich, das Volumen des zusätzlich zur Verfügung gestellten Ausgleichsraumes durch die erfindungsgemäße Feder zu maximieren ohne auf die Vorteile einer Federbeaufschlagung verzichten zu müssen.

Weitere vorteilhafte Ausführungen der Erfindung sind in den abhängigen Ansprüchen definiert.

In einer besonders bevorzugten Ausführungsform der Erfindung ist die Feder eine Kegelfeder. Eine Kegelfeder zeichnet sich dadurch aus, dass die Projektion der Federwicklungen auf eine Ebene senkrecht zur Längsachse der Feder eine Spirale darstellt. Eine Kompression der Kegelfeder ermöglicht Anordnung der Federwicklungen ineinander, sodass die komprimierte Feder eine Spirale ausbildet, wodurch die Längsausdehnung der komprimierten Feder im Wesentlichen der Querschnittstärke der Feder bzw. der Federwicklungen entspricht. Die einzelnen Wicklungen der Kegelfeder sind spiralförmig aufgebaut und nehmen daher im Durchmesser zu. Die mit kleinerem Durchmesser versehenen Wicklungen werden bei Kompression der Feder in die Wicklungen mit größerem Durchmesser hinein geschoben. Bei der Kompression bis auf Querschnittsstärke sind alle Wicklungen in die an der Basis der Kegelfeder angeordnete Wicklung mit dem größten Durchmesser hinein geschoben. Die Querschnittsstärke der Feder ist hier durch den Querschnittsdurchmesser des Federdrahts oder Federbands mit dem größten Wicklungsdurchmesser gegeben.

Bevorzugt vorgesehen ist, dass die Feder eine zentrale Öffnung aufweist, in der der Kolben bzw. eine mit dem Kolben verbundene Kolbenstange angeordnet ist, sodass im Montagezustand des Möbeldämpfers die Federwicklungen um den Kolben bzw. die Kolbenstange angeordnet sind. Dadurch wird die Feder während des Bewegungsvorgangs des ersten Anschlagelements relativ zum zweiten Anschlagelement vom Kolben bzw. der Kolbenstange geführt.

In einer weiteren Ausführungsform der Erfindung weist das erste Anschlagelement eine Anschlagfläche auf, an der im Montagezustand der Feder ein erstes Ende der Feder anliegt und die Feder sich dadurch am ersten Anschlagelement abstützt. Dadurch kann auf Vorsprünge im Anschlagelement zur Befestigung der Feder, die einen hohen Platzbedarf aufweisen, verzichtet werden. Zusätzlich oder alternativ kann das zweite Anschlagelement eine Anschlagfläche aufweisen, an der im Montagezustand der Feder ein zweites Ende der Feder anliegt, wodurch sich die Feder am zweiten Anschlagelement abstützt. Dadurch kann am zweiten Anschlagelement auf Vorsprünge, die einen hohen Platzbedarf aufweisen und zur Lagerung der Feder dienen, verzichtet werden. Die Anschlagelemente werden von der Feder durch die Anschlagfläche(n) beaufschlagt. Eine Relativbewegung der Anschlagelemente zueinander überträgt sich über die Anschlagfläche(n) der Anschlagelemente auf die Feder.

Während des Dämpfungsvorgangs überträgt sich die Relativbewegung zwischen Fluidkammer und Kolben auf die Anschlagelemente, sodass auch diese relativ zueinander bewegt werden, wodurch die Feder zwischen den Anschlagelementen komprimiert wird. Die Feder ist dabei derart ausgelegt, dass in Folge eines maximalen Dämpfungshubes das zweite und das erste Anschlagelement minimalen Abstand zueinander einnehmen und die zwischen den Anschlagelementen angeordnete Feder im Wesentlichen bis auf Querschnittstärke der Feder bzw. Federwicklungen komprimiert wird. In weiterer Folge dehnt sich die Feder wieder auf ihre Nulllage auf und überträgt diese Bewegung auf die Anschlagelemente, sodass diese wieder größeren Abstand einnehmen und in ihre Ausgangslage zurückgestellt werden.

Das zweite Anschlagelement weist ein Dichtungselement auf, das über Dichtlippen verfügt, die sich im Montagezustand am Kolben bzw. an einer mit dem Kolben verbundenen Kolbenstange und zusätzlich oder alternativ an der Wandung eines die Fluidkammer umgebenden Gehäuses anlegen und dadurch die Fluidkammer abdichten. Die Abdichtung verhindert dabei ein Austreten des in der Fluidkammer angeordneten Fluids. Bevorzugt ist dabei vorgesehen, dass die Fluidkammer von einem Gehäuse umschlossen wird, welches ein offenes Ende aufweist. Die Abdichtung durch die Dichtungsvorrichtung, insbesondere durch das Dichtungselement mit den Dichtlippen schließt die Fluidkammer gegenüber dem offenen Ende ab.

Das Möbelscharnier weist ein korpusseitiges Anschlagteil und einen damit gelenkig verbundenen Scharniertopf zur Befestigung von Möbelteilen auf, wobei der Möbeldämpfer in Montagelage im Wesentlichen vollständig innerhalb des Scharniertopfs angeordnet ist. Stattdessen kann es auch vorgesehen sein, dass der Möbeldämpfer von oben her in den Scharniertopf einsetzbar und innerhalb des Scharniertopfs anordenbar ist. Das Anschlagteil und der Scharniertopf können dabei bereits miteinander gelenkig verbunden sein. Der Möbeldämpfer ist mit dem Scharniertopf über zusammenwirkende Befestigungsmittel in dieser Montagelage miteinander verbindbar.

Der Raum innerhalb eines Scharniertopfs ist im Allgemeinen sehr klein, da Scharniertöpfe in Seitenwänden von Möbelkorpussen oder in Türen, die Möbelkorpusse verschließen angeordnet sind. Der Vorteil von in Scharniertöpfen angeordneten Möbeldämpfern ist, dass kein Raum innerhalb des Möbelkorpus durch die Anordnung des Dämpfers verbraucht wird. An Möbeldämpfer die in Scharniertöpfen angeordnet sind werden aber sehr hohe Anforderungen hinsichtlich der Kleinheit der zu verwendenden Bauteile gestellt. Aus diesem Grund ist ein erfindungsgemäßer Möbeldämpfer, der eine Feder zwischen einem ersten und zweiten Anschlagelement aufweist, die im Wesentlichen bis auf Querschnittstärke der Feder komprimierbar ist, von besonderem Vorteil.

Der Möbeldämpfer zur Dämpfung einer Bewegung eines bewegbar gelagerten Möbelteils oder eines bewegbar gelagerten Möbelbeschlagbauteils des Möbelscharniers hat einen in einer Fluidkammer angeordneten Kolben, wobei eine Dämpfwirkung durch eine Relativbewegung zwischen Fluidkammer und Kolben erfolgt mit einer Dichtungsvorrichtung zur Abdichtung der Fluidkammer, wobei die Dichtungsvorrichtung ein erstes Anschlagelement und ein zweites, relativ zum ersten Anschlagelement bewegbar gelagertes und zur Abdichtung der Fluidkammer ausgebildetes Anschlagelement aufweist und wobei der Kolben am Ende des Dämpfungshubes relativ zur Fluidkammer eine erste Endstellung einnimmt, wobei eine Rückstellfeder vorgesehen ist, durch die die Relativposition des Kolbens relativ zur Fluidkammer in eine von der Endstellung entfernte Bereitschaftsstellung verstellbar ist, wobei die Rückstellfeder zwischen dem ersten und dem zweiten Anschlagelement angeordnet ist.

Der Möbeldämpfer ist dabei wie oben beschrieben ausgebildet, wobei die zur Rückstellung der Relativposition des ersten und zweiten Anschlagelements dienende und zwischen erstem und zweitem Anschlagelement angeordnete Feder zusätzlich zur Rückstellung der Relativposition des Kolbens zur Fluidkammer dient. Die zwischen erstem und zweitem Anschlagelement angeordnete Feder kann dabei weitere, zur Rückstellung der Relativposition des Kolbens zur Fluidkammer dienende Rückstellfeder(n) unterstützen oder vollkommen ersetzen.

Die zwischen erstem und zweitem Anschlagelement angeordnete Feder muss im letzt genannten Fall eine derartige Federkonstante aufweisen, dass nicht nur die Anschlagelemente rückgestellt werden können, sondern eben auch die Relativposition des Kolbens relativ zur Fluidkammer nach Beendigung eines Dämpfungsvorgangs in die Bereitschaftstellung zurückstellbar ist, sodass der Möbeldämpfer für einen neuerlichen Dämpfungsvorgang einsatzbereit ist. Es kann dabei wiederum vorgesehen sein, dass die Feder durch die Relativbewegung des ersten und zweiten Anschlagelements im Wesentlichen bis auf Querschnittstärke der Feder komprimierbar ist.

Die Erfindung betrifft ein Möbelscharnier mit einem Möbeldämpfer mit einer wie oben beschriebenen Rückstellfeder. Das Möbelscharnier weist ein korpusseitiges Anschlagteil und einen damit gelenkig verbundenen Scharniertopf zur Befestigung von Möbelteilen auf. Der Möbeldämpfer ist dabei in Montagelage im Wesentlichen vollständig innerhalb des Scharniertopfs angeordnet oder von oben her in den Scharniertopf bei bereits miteinander gelenkig verbundenem Anschlagteil und Scharniertopf einsetzbar und innerhalb des Scharniertopfs anordenbar. Der Möbeldämpfer ist mit dem Scharniertopf über zusammenwirkende Befestigungsmittel in dieser Montagelage miteinander verbindbar.

Weiter Einzelheiten und Vorteile der vorliegenden Erfindung werden anhand der Figurenbeschreibung unter Bezugnahme auf die Zeichnungen im Folgenden näher erläutert. Darin zeigt:
- Fig. 1: eine perspektivische Darstellung eines Möbels mit einer Türe, welche über Möbelscharniere relativ zu einem Möbelkorpus verschwenkbar gelagert ist,
- Fig. 2a und 2b: perspektivische Darstellungen eines Möbelscharniers mit einem im Scharniertopf anzuordnenden Möbeldämpfer,
- Fig. 3a bis 3c: der Möbeldämpfer in einer Explosionsdarstellung, eine vergrößerte Detaildarstellung des Schiebers sowie das Arretierelement in einer perspektivischen Ansicht von unten;
- Fig. 4a und 4b: perspektivische Ansichten eines Längsschnitts durch den Möbeldämpfer in verschiedenen Positionen des Kolbens relativ zur Fluidkammer,
- Fig. 5a und 5b: die Darstellungen der Figuren 4a und 4b in einem anderen Zeitpunkt während des Dämpfungsvorgangs,
- Fig. 6a und 6b: eine teilweise aufgebrochene perspektivische Ansicht durch ein Möbelscharnier mit einem im Scharniertopf integrierten Möbeldämpfer sowie eine Detailansicht dazu,
- Fig. 7: eine perspektivische Ansicht eines Längsschnitts eines im Scharniertopf integrierten Möbeldämpfers sowie eine vergrößerte Detaildarstellung hierzu
- Fig. 8a und 8b: die Draufsicht auf einen Längsschnitt durch den Möbeldämpfer sowie eine vergrößerte Detaildarstellung hierzu
- Fig. 9a und 9b: die Darstellungen der Fig. 8a und 8b in einem anderen Zeitpunkt während des Dämpfungsvorgangs
- Fig. 10a und 10b: die Darstellungen der Fig. 8a und 8b in einem wiederum anderen Zeitpunkt während des Dämpfungsvorgangs, und
- Fig. 11a bis 11e: verschiedene Ansichten einer erfindungsgemäßen Kegelfeder.

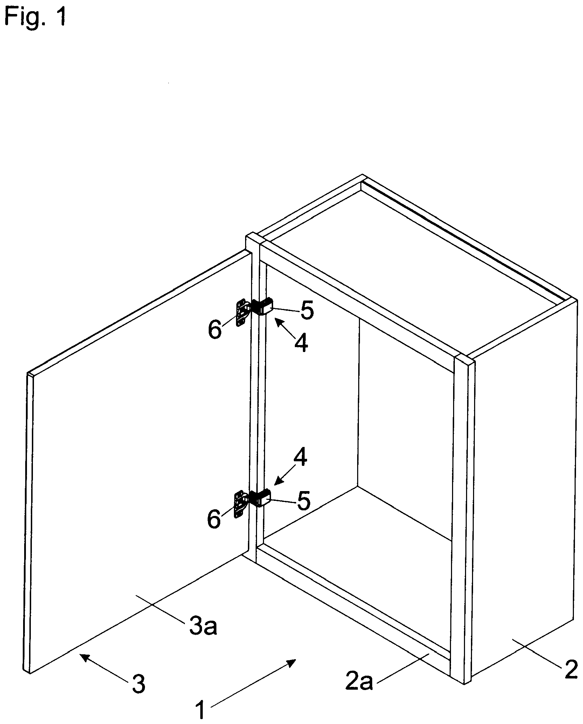

Fig. 1 zeigt eine perspektivische Darstellung eines Möbels 1, wobei ein bewegbares Möbelteil 3 in Form einer Türe 3a über zwei oder mehrere Möbelscharniere 4 relativ zu einem Möbelkorpus 2 verschwenkbar gelagert ist. Die Möbelscharniere 4 weisen in bekannter Weise ein an einem Rahmen 2a zu befestigendes Anschlagteil 5 sowie einen mit dem Anschlagteil 5 schwenkbar verbundenen Scharniertopf 6 auf. Im Innenhohlraum des Scharniertopfes 6 ist jeweils ein (hier nicht ersichtlicher) Möbeldämpfer gelagert, durch die eine Schließbewegung des Möbelscharniers 4 bis hin zur vollständig geschlossenen Endlage dämpfbar ist. Je nach Größe und Gewicht des bewegbaren Möbelteiles 3 kann die Dämpfleistung des Möbeldämpfers nicht entsprechend angepasst sein, d.h. dass bei zu stark vorhandener Dämpfleistung das bewegbare Möbelteil 3 entweder zu langsam oder gar nicht in die vollständige Schließstellung gelangen kann. Aus diesem Grund kann die Dämpfwirkung des Möbeldämpfers über eine Verriegelungsvorrichtung vollständig deaktiviert werden. Hierbei kann es beispielsweise zweckmäßig sein, die Dämpfwirkung eines ersten Möbelscharniers 4 vollständig zu deaktivieren, während ein zweites Möbelscharnier 4 eine aktive Dämpfwirkung bereitstellt, welche eine gewünschte gedämpfte Schließbewegung des bewegbaren Möbelteiles 3 bis hin zur vollständigen Schließstellung ermöglicht.

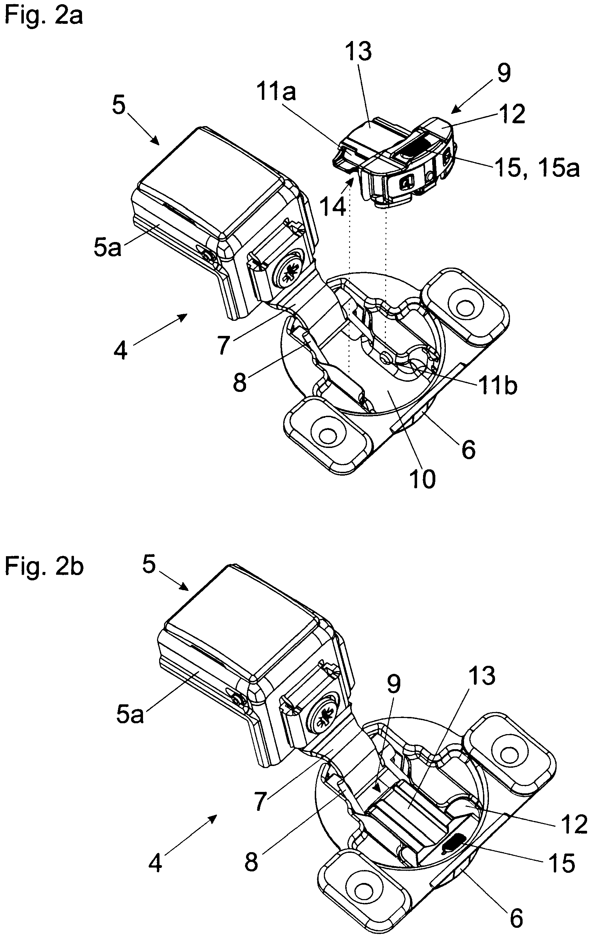

Fig. 2a zeigt eine perspektivische Darstellung eines Möbelscharniers 4, wobei der Scharniertopf 6 über zumindest einen Gelenkhebel 7 schwenkbar mit dem Anschlagteil 5 in Form eines Scharnierarmes 5a verbunden ist. Über eine Federvorrichtung 8 kann das Möbelscharnier 4 in die vollständige Schließstellung und/oder in die vollständige Offenstellung bewegt werden. Zur Dämpfung dieser federunterstützten Bewegung in die Endlage(n) ist eine Möbeldämpfer 9 vorgesehen, welche ein Gehäuse 12 und einen relativ dazu bewegbaren Schieber 13 aufweist. Der Möbeldämpfer 9 ist entweder bereits ab Werk in den Innenhohlraum 10 des Scharniertopfes 6 eingesetzt oder kann in alternativer Weise - bei montiertem Anschlagteil 5 und Scharniertopf 6 - in nachrüstbarer Weise von oben her in den Scharniertopf 6 eingesetzt und innerhalb des Scharniertopfes 6 angeordnet werden, wobei der Möbeldämpfer 9 über zusammenwirkende Befestigungsmittel 11 a, 11 b in dieser Montagelage miteinander lösbar verbindbar sind. Im gezeigten Ausführungsbeispiel weist der Möbeldämpfer 9 erste Befestigungsmittel 11a in Form einer Führungsnut auf, welche mit am Scharniertopf 6 angeordneten Befestigungsmitteln 11 b in Form eines Befestigungszapfens lösbar verbindbar sind. Der Möbeldämpfer 9 weist eine Einführöffnung 14 auf, durch die der Befestigungszapfen 11 b in der Führungsnut 11a anordenbar ist. Der Möbeldämpfer 9 weist zur Deaktivierung der Dämpfungsfunktion eine Verriegelungsvorrichtung 15 mit einem verstellbaren Arretierelement 15a in Form eines Schalters auf, durch den der Schieber 13 in der vollständig eingedrückten Stellung lösbar arretierbar ist.

Fig. 2b zeigt eine perspektivische Darstellung des Möbelscharniers 4 mit dem Möbeldämpfer 9 in der Montagestellung. Der Möbeldämpfer 9 ist vollständig im Innenhohlraum 10 des Scharniertopfes 6 angeordnet. Bei der Schließbewegung des Möbelscharniers 4 trifft der Gelenkhebel 7 auf den Schieber 13 auf, wodurch der Dämpfungsvorgang eingeleitet wird. Im Zuge der weiteren Schließbewegung kann der Schieber 13 relativ zum Gehäuse 12 in eine vollständige Endlage eingedrückt werden, wobei diese Endlage durch die Verriegelungsvorrichtung 15 lösbar arretierbar ist. Der Schieber 13 ist in der Arretierstellung nicht mehr rückstellbar, wobei also die Dämpfwirkung deaktiviert ist.

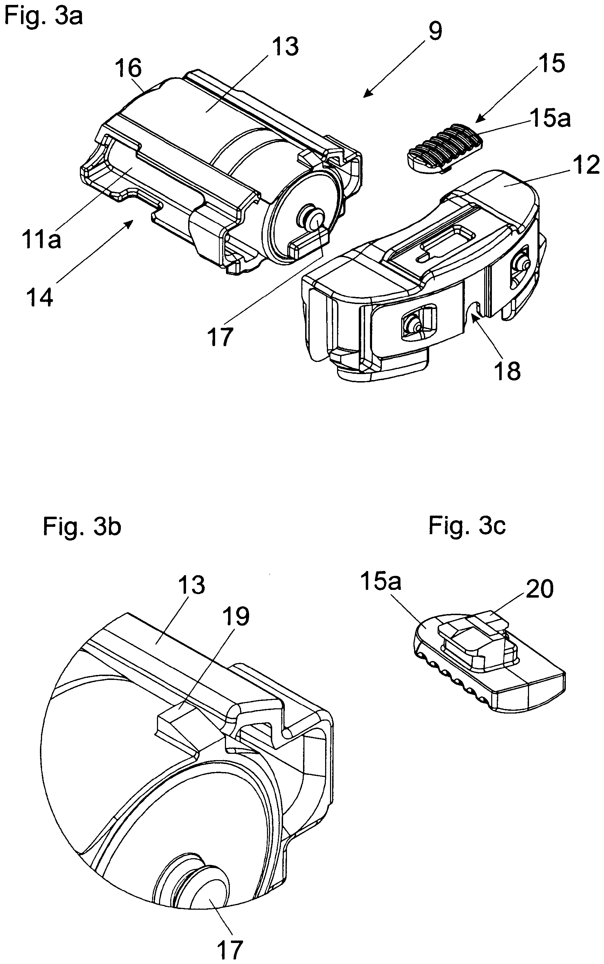

Der Möbeldämpfer 9 weist gemäß der Explosionsdarstellung der Fig. 3a ein Gehäuse 12 und einen relativ dazu verschiebbaren Schieber 13 auf. Der Möbeldämpfer 9 ist als Lineardämpfer ausgebildet und umfasst eine Kolbenstange 17, welche mit dem Gehäuse 12 verbunden ist. Bei diesem Ausführungsbeispiel ist also vorgesehen, dass die Kolbenstange 17 (und damit ein mit der Kolbenstange 17 verbundener Kolben) in Montagelage feststehend angeordnet ist, während sich eine im Schieber 13 ausgebildete Fluidkammer relativ zu dieser feststehenden Kolbenstange 17 bewegt. Der Schieber 13 ist als Schiebekeil ausgebildet und weist eine schräge Anschlagfläche 16 auf, welche ab einer vorgegebenen Relativstellung des Möbelscharniers 4 vom Gelenkhebel 7 (Fig. 2b) beaufschlagbar ist.

Im Inneren des Schiebers 13 ist zumindest eine Fluidkammer ausgebildet, in der wenigstens ein (hier nicht ersichtlicher) Kolben mit einer Kolbenstange 17 verschiebbar gelagert ist. Gut erkennbar sind die Befestigungsmittel 11a in Form von beidseitigen Führungsnuten, durch die der Schieber 13 beim Dämpfungshub relativ zu den Befestigungszapfen 11b des Scharniertopfes 6 verschiebbar ist. Durch die Einführöffnung 14 kann der Befestigungszapfen 11 b in der Führungsnut 11a angeordnet werden. Das Gehäuse 12 weist ein Lager 18 auf, an dem die Kolbenstange 17 zu befestigen ist. Am Schieber 13 ist ein erstes Feststellelement 19 angeordnet, welches in der eingedrückten Endstellung des Schiebers 13 relativ zu einem am Schalter 15a angeordneten, zweiten Feststellelement 20 feststellbar ist.

Fig. 3b zeigt eine vergrößerte Detaildarstellung des Schiebers 13, an dem ein erstes Feststellelement 19 in Form einer federnden Lasche ausgebildet ist. Fig. 3c zeigt das als Schalter ausgebildete Arretierelement 15a in einer perspektivischen Ansicht von unten. An der Unterseite des Arretierelementes 15a ist ein zweites, im Wesentlichen starres Feststellelement 20 angeordnet, durch welches das erste Feststellelement 19 des Schiebers 13 in der vollständig eingedrückten Endlage des Schiebers 13 feststellbar ist.

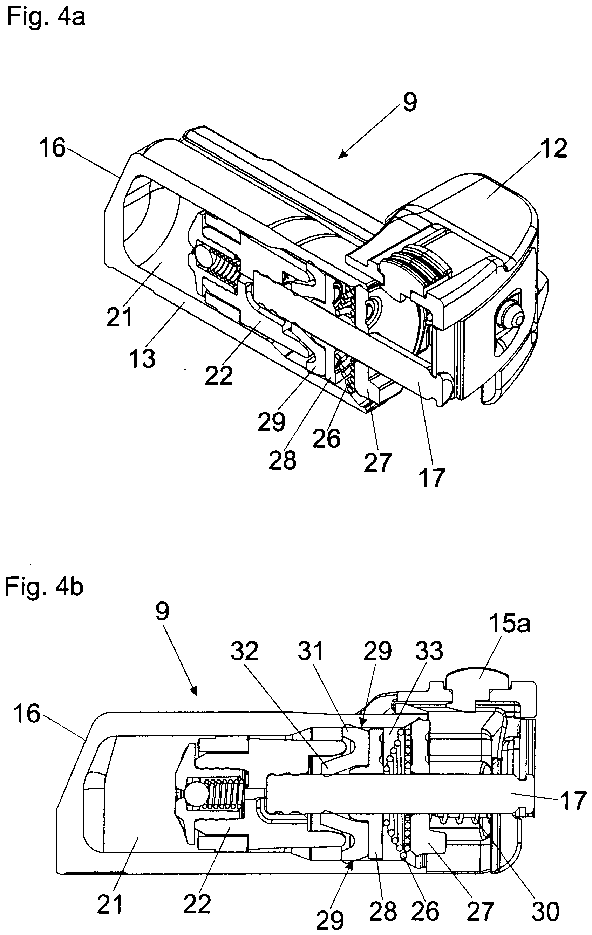

Fig. 4a zeigt eine perspektivische Ansicht eines Längsschnitts durch einen Möbeldämpfer 9. Erkennbar ist der Schieber 13, in dem eine Fluidkammer 21 ausgebildet ist und in der ein Kolben 22 mit der Kolbenstange 17 gelagert ist, welche im gezeigten Ausführungsbeispiel feststehend angeordnet ist. Bei der Schließbewegung des Möbelscharniers 4 trifft der Gelenkhebel 7 (Fig. 2b) auf die schräge Anschlagfläche 16 des Schiebers 13 auf, woraufhin der Schieber 13 relativ zum feststehenden Kolben 22 verschiebbar ist.

Das Gehäuse des Schiebers 13 weist ein offenes Ende auf, das von einem als Abdeckplatte ausgebildeten ersten Anschlagelement 27 verschlossen ist. Das erste Anschlagelement 27 weist eine Öffnung für die Kolbenstange 17 auf. Um die Kolbenstange 17 ist die als Kegelfeder ausgebildete Feder 26 angeordnet. Ein erstes Ende der Feder 26 legt sich an der Anschlagfläche des ersten Anschlagelements 27 an und stützt sich dabei auf dem ersten Anschlagelement 27 ab. Das schmälere zweite Ende der Feder 26 legt sich an eine Anschlagfläche des zweiten Anschlagelements 28 an und stützt sich auf diesem ab. Das zweite Anschlagelement 28 weist ein Dichtungselement 29 auf, das über eine äußere Dichtlippe 31 und eine innere Dichtlippe 32 verfügt. Die äußere Dichtlippe 31 dient zur Abdichtung der Fluidkammer 21 im Bereich der Gehäusewandung des Schiebers 13 und legt sich an dieser an. Die innere Dichtlippe 32 dient zur Abdichtung der Fluidkammer 21 im Bereich der Kolbenstange 17 und legt sich zu diesem Zweck an dieser an.

In Fig. 4b ist eine Draufsicht auf den Längsschnitt der Fig. 4a gezeigt, wobei anzuführen ist, dass die Dichtlippen 31 und 32 schematisch dargestellt sind. Ohne Kolbenstange 17 bzw. Wandung des Schiebers 13 würde das Dichtungselement 29 mit den äußeren und inneren Dichtungslippen 31, 32, die dargestellte Form einnehmen, das heißt es weist geringfügig größere Ausmaße als der tatsächlich innerhalb der Fluidkammer 21 vorhandene Platz auf. In Montagelage wird aufgrund des elastischen bzw. verformbaren Dichtungselements 29 die äußere Dichtungslippe 31 von der Gehäusewandung nach innen gedrückt, während die innere Dichtungslippe 32 von der Kolbenstange 17 nach außen gedrückt wird. Dadurch ist die Bewegbarkeit des zweiten Anschlagelementes 28 zusammen mit dem Dichtungselement 29 bei gleichzeitiger Abdichtung der Fluidkammer 21 bzw. des Schiebers 13 ermöglicht. Das Dichtungselement 29 kann dabei auf dem zweiten Anschlagelement 28 beispielsweise mit Klebstoff fixiert sein oder mit diesem verschraubt sein.

Die Fig. 4a und 4b zeigen den Möbeldämpfer 9 vor der Initiierung eines Dämpfungsvorgangs durch den Gelenkhebel 7. Der Möbeldämpfer 9 ist in Bereitschaftsstellung. Das im Bereich links des Kolbens 22 in dem der Fluidkammer 21 angeordnete Fluid wird dabei über Durchtrittsöffnungen in den Bereich rechts vom Kolben 22 gedrängt, wodurch sich ein Dämpfungseffekt einstellt. Das Dichtelement 29 mit den äußeren und inneren Dichtungslippen 31, 32 verhindert einen Durchtritt des Fluids in den zusätzlichen Ausgleichsraum 33 zwischen erstem und zweitem Anschlagelement 27, 28. Dieser zusätzliche Ausgleichsraum 33 dient als zusätzlicher Dämpfungshub und ermöglicht über die Feder 26 eine sanfter abgestimmte Dämpfung.

Die Rückstellfeder 30, die aus Gründen der Übersichtlichkeit in Fig. 4a nicht dargestellt ist, beaufschlagt das zweite Anschlagelement 27 und dient dazu, den Schieber 13 nach erfolgte Dämpfung wieder zurückzustellen.

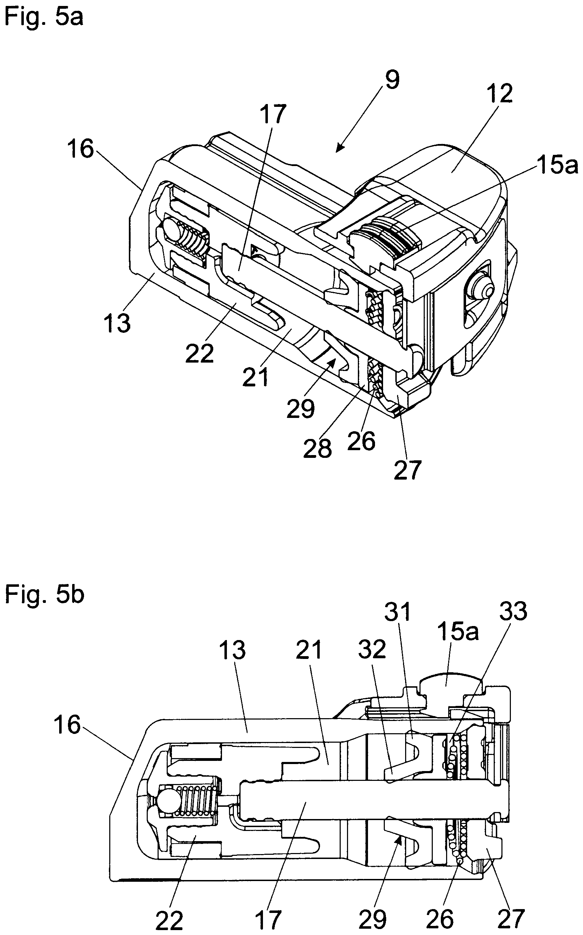

Fig. 5a und 5b zeigen den Möbeldämpfer 9 wiederum in einer perspektivischen Ansicht (Fig. 5a) und einer Draufsicht (Fig. 5b) eines Längsschnittes. Die dargestellten Bauteile entsprechen jenen der Fig. 4a und 4b. In der in den Figuren 5a und 5b dargestellten Situation ist der Schieber 13 beinahe in seiner Endstellung bezüglich des Kolbens 22.
Der durch den Kolben 22 mögliche Dämpfungshub ist beinahe vollständig ausgenützt worden. Neben dem noch zur Verfügung stehenden Dämpfungshub drückt das mit einer gewissen Trägheit sich bewegende Fluid der Fluidkammer 21 zusätzlich noch in Richtung des Dichtelementes 29. Wie zu erkennen ist, ist das zusätzliche Ausgleichsvolumen 33 des zusätzlichen Ausgleichsraums 33 ebenso noch nicht ganz ausgenützt, da sich die Feder 26 bis auf Querschnittstärke komprimieren lässt.

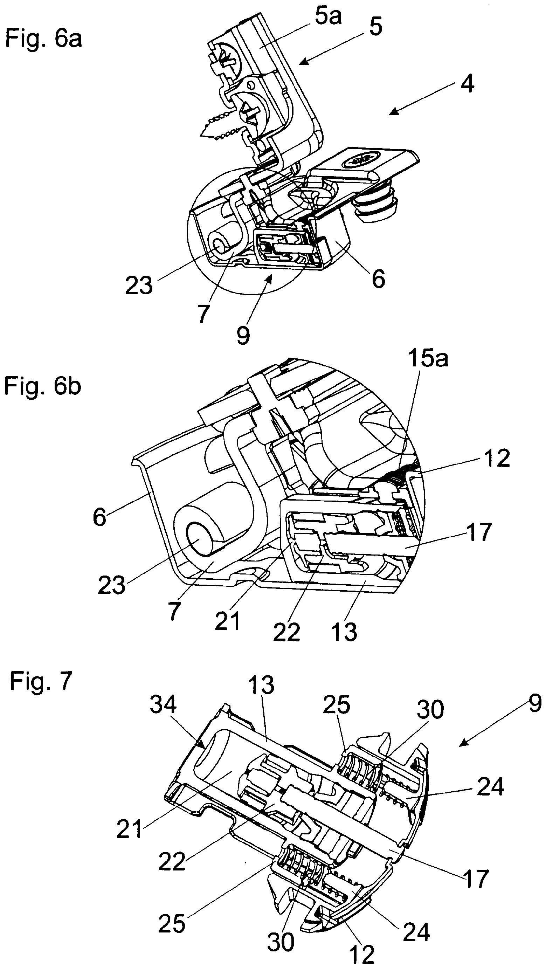

Fig. 6a zeigt einen Querschnitt eines Möbelscharniers 4 mit dem Möbeldämpfer 9 in Montagelage. Das Möbelscharnier 4 weist einen als Scharnierarm 5a ausgebildeten - vorzugsweise L-förmigen - Anschlagteil 5 auf, der über einen Gelenkhebel 7 schwenkbar mit einem Scharniertopf 6 verbunden ist. Der Gelenkhebel 7 ist um eine scharniertopfseitige Drehachse 23 verschwenkbar gelagert. Fig. 6b zeigt eine vergrößerte Detailansicht des in Fig. 6a eingekreisten Bereiches. Gegen Ende der Schließbewegung trifft der Gelenkhebel 7 auf die schräge Anschlagfläche 16 des Schiebers 13 auf und verschiebt diesen relativ zum feststehenden Kolben 22. Der Dämpfungshub des Möbeldämpfers 9 verläuft im Wesentlichen rechtwinklig zur Drehachse 23. Durch den Schalter 15a ist der Schieber 13 in der eingedrückten Endstellung relativ zum Gehäuse 12 des Möbeldämpfers 9 arretierbar, wodurch die Dämpfungswirkung deaktivierbar ist.

Fig. 7 zeigt den Möbeldämpfer 9 in einem Längsschnitt. Innerhalb der Fluidkammer 21 ist der Kolben 22 mit der Kolbenstange 17 gelagert. Erkennbar ist ein außerhalb der Fluidkammer 21 gelegener Rückstellmechanismus 30 in Form zweier Rückstellfedern, welche sich einerseits an Anschlägen 24 des Gehäuses 12, andererseits an Gegenanschlägen 25 des Schiebers 13 abstützen. Durch den Rückstellmechanismus 30 kann der Schieber 13 nach erfolgtem Dämpfungshub wieder in eine für den nächsten Dämpfungshub vorgesehene Bereitschaftsstellung rückgestellt werden. Selbstverständlich ist es auch möglich, eine Rückstellfeder im Inneren der Fluidkammer 21 anzuordnen, welche einerseits am Boden 34 der Fluidkammer 21 und anderseits am Kolben 22 abstützbar ist und so den Kolben 22 wieder in die Bereitschaftsstellung drückt.

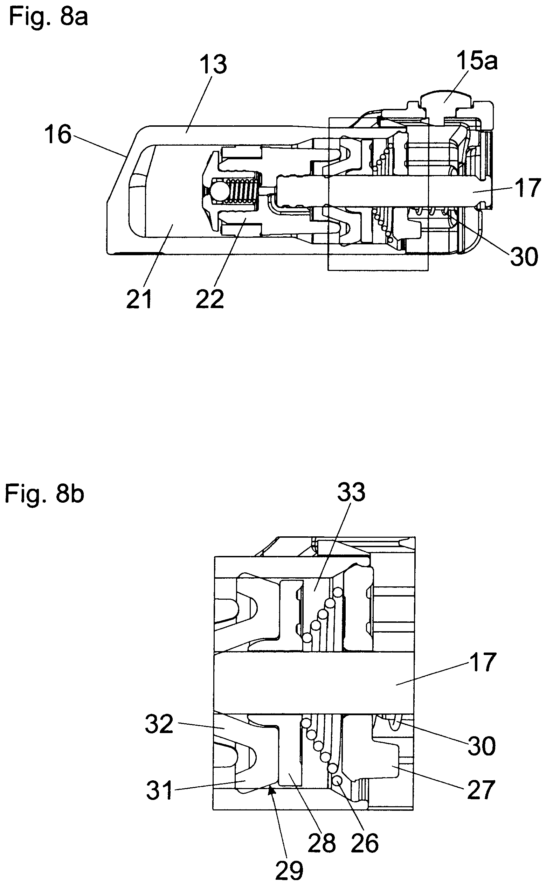

Fig. 8a entspricht prinzipiell der Fig. 4b. Der markierte Ausschnitt ist in einer vergrößerten Ansicht in Fig. 8b gezeigt. Die dargestellt Situation ist vor Einleitung des Dämpfungsvorgangs. Der zusätzliche Ausgleichsraum 33 ist noch vollkommen ungenützt. Die Feder ist in ihrer Nulllage bzw. in der durch die Anschlagelemente 27, 28 gegebenen Ausgangslage und noch nicht durch eine Relativbewegung der Anschlagelemente 27, 28 komprimiert.

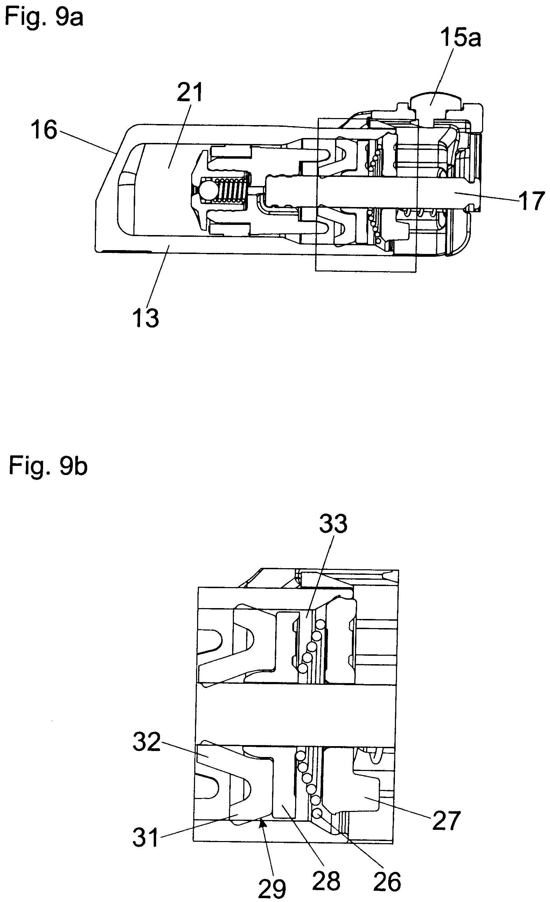

Fig. 9a und Fig. 9b zeigen die Bauteile der Fig. 8a und 8b, wobei der Dämpfungsvorgang bereits weiter fortgeschritten ist. Die Feder 26 ist bereits komprimiert und der zusätzliche Ausgleichsraum 33 durch das sich auf das erste Anschlagelement 27 zu bewegende zweite Anschlagelement 28 teilweise ausgenützt.

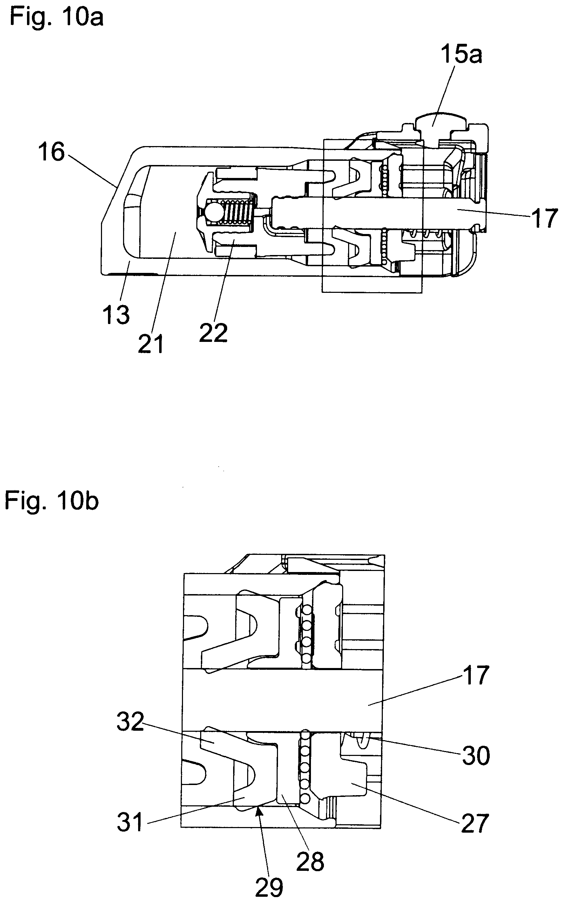

Fig. 10a und Fig. 10b zeigen die Bauteile der Fig. 8a und 8b, wobei der Dämpfungsvorgang nun beendet ist und sich das erste Anschlagelement 27 und das zweite Anschlagelement 28 in ihrer Endstellung, d. h. im knappsten Abstand zueinander befinden. Die Feder 26 ist vollkommen, bis auf Querschnittsstärke der Feder 26 bzw. der Federwicklung komprimiert. Dadurch ist ein Maximum an Dämpfungshub realisiert und der Innenraum des Schiebers 13 kann klein ausgebildet sein, bei dennoch ausreichendem Dämpfungshub. Insbesondere bei der Anordnung innerhalb eines Scharniertopfs ist dies von großem Vorteil.

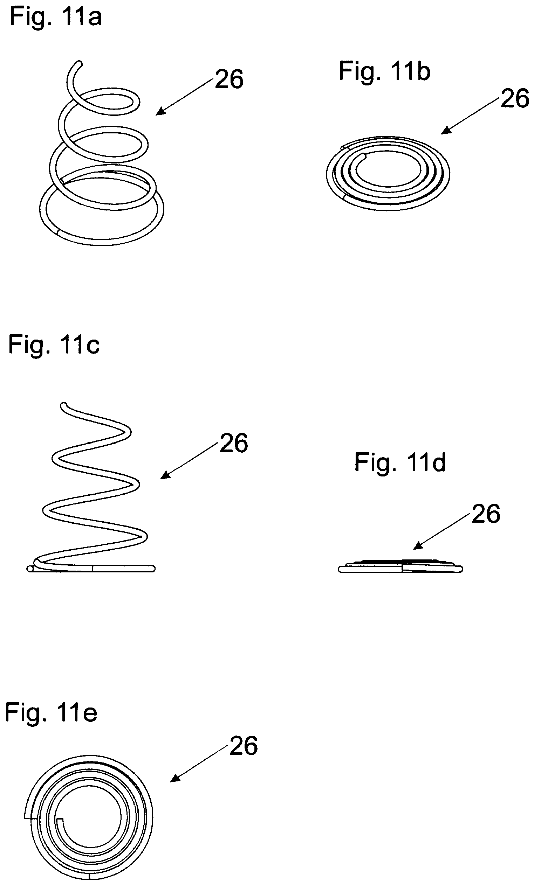

Die Figuren 11a und 11 b zeigen die als Kegelfeder ausgebildete Feder 26 in perspektivischen Ansichten in ihrer Nulllage (Fig. 11a) und in der komprimierten Lage (Fig. 11 b), wo erkennbar ist, dass die Feder 26 bis zur Form einer Spirale komprimierbar ist, sodass die komprimierte Feder 26 im Wesentlichen Querschnittstärke aufweist.

Dies ist ebenfalls gut aus der Seitenansicht der Fig. 11d erkennbar. Demgegenüber zeigt die Seitenansicht der Feder 26 der Fig. 11c die Feder in ihrer Nulllage.

Fig. 11e wiederum zeigt eine Draufsicht auf die Feder 26, wo erkennbar ist, dass die Projektion der Feder 26 auf eine Ebene senkrecht auf die Längsachse die Form einer Spirale aufweist unabhängig vom Kompressionszustand. Erkennbar ist, dass die Federwicklungen der Feder 26 derart ausgebildet sind, dass eine Ineinanderschiebung möglich ist.

In den dargestellten Zeichnungen wird die Rückstellung des Schiebers 13 über Rückstellfedern 30 realisiert. Es ist aber auch möglich, diese Rückstellung durch die Feder 26 zu ermöglichen, wobei die Feder 26 die Rückstellfedern 30 unterstützen oder gänzlich ersetzen kann.

Die vorliegende Erfindung beschränkt sich nicht auf das gezeigte Ausführungsbeispiel, sondern erstreckt sich auf alle Varianten und technischen Äquivalente, welche in die Reichweite der nachfolgenden Ansprüche fallen können. Auch sind die in der Beschreibung gewählten Lageangaben, wie z.B. oben, seitlich, usw. auf die unmittelbar dargestellte Figur bezogen und sind bei einer Lageänderung sinngemäß auf die neue Lage zu übertragen.

## Patentansprüche

1. Möbelscharnier (4) mit:
- einem Möbeldämpfer (9) zur Dämpfung einer Bewegung eines bewegbar gelagerten Möbelteils (2, 3) oder eines bewegbar gelagerten Möbelbeschlagbauteils eines Möbelbeschlags mit
einem in einer Fluidkammer (21) angeordneten Kolben (22), wobei eine Dämpfwirkung durch eine Relativbewegung zwischen Fluidkammer (21) und Kolben (22) erfolgt und mit
einer Dichtungsvorrichtung zur Abdichtung der Fluidkammer (21), wobei die Dichtungsvorrichtung ein erstes Anschlagelement (27) und ein zweites, relativ zum ersten Anschlagelement (27) bewegbar gelagertes und zur Abdichtung der Fluidkammer (21) ausgebildetes Anschlagelement (28) aufweist und wobei das zweite Anschlagelement (28) relativ zum Kolben (22) bewegbar gelagert ist und ein Dichtungselement (29) mit einer äußeren und einer inneren Dichtungslippe (31, 32) zur Abdichtung der Fluidkammer (21) aufweist, die sich im Montagezustand am Kolben (22) bzw. an einer mit dem Kolben (22) verbundenen Kolbenstange (17) und/oder an der Gehäusewandung der Fluidkammer (21) anlegen, und wobei zwischen erstem Anschlagelement (27) und zweitem Anschlagelement (28) eine Feder (26) angeordnet ist,
- einem korpusseitigen Anschlagteil (5) und
- einem damit gelenkig verbundenen Scharniertopf (6) zur Befestigung von Möbelteilen (2, 3),
**dadurch gekennzeichnet, dass** der Möbeldämpfer (9) in Montagelage im Wesentlichen vollständig innerhalb des Scharniertopfs (6) angeordnet ist, oder bei bereits miteinander gelenkig verbundenen Anschlagteil (5) und Scharniertopf (6) von oben her in den Scharniertopf (6) einsetzbar und innerhalb des Scharniertopfs (6) anordenbar ist, wobei der Möbeldämpfer (9) mit dem Scharniertopf (6) über zusammenwirkende Befestigungsmittel (11a, 11 b) in dieser Montagelage miteinander verbindbar ist, und dass die Feder (26) durch die Relativbewegung des ersten Anschlagelements (27) und des zweiten Anschlagelements (28) bis auf Querschnittstärke der Feder (26) komprimierbar ist.

2. Möbelscharnier nach Anspruch 1, **dadurch gekennzeichnet, dass** die Feder (26) eine Kegelfeder ist.

3. Möbelscharnier nach Anspruch 1 oder 2, **dadurch gekennzeichnet, dass** die Feder (26) eine zentrale Öffnung aufweist, in der der Kolben (22) oder eine mit dem Kolben (22) verbundene Kolbenstange (17) angeordnet ist.

4. Möbelscharnier nach einem der Ansprüche 1 bis 3, **dadurch gekennzeichnet, dass** das erste Anschlagelement (27) eine Anlagefläche aufweist, an der im Montagezustand der Feder (26) ein erstes Ende der Feder (26) anliegt.

5. Möbelscharnier nach einem der Ansprüche 1 bis 4, **dadurch gekennzeichnet, dass** die Fluidkammer (21) ein offenes Ende aufweist und das erste Anschlagelement (27) als Abdeckplatte zur Abschließung des offenen Endes der Fluidkammer (21) ausgebildet ist.

6. Möbelscharnier nach einem der Ansprüche 1 bis 5, **dadurch gekennzeichnet, dass** das zweite Anschlagelement (28) eine Anlagefläche aufweist, an der im Montagezustand der Feder (26) ein zweites Ende der Feder (26) anliegt.

7. Möbelscharnier nach einem der Ansprüche 1 bis 6, **dadurch gekennzeichnet, dass** der Kolben (22) am Ende des Dämpfungshubes relativ zur Fluidkammer (21) eine erste Endstellung einnimmt und durch die Feder (26) die Relativposition des Kolbens (22) relativ zur Fluidkammer (21) in eine von der Endstellung entfernte Bereitschaftsstellung verstellbar ist.

## Claims

1. A furniture hinge (4) comprising:
a furniture damper (9) for damping a movement of a movably mounted furniture part (2, 3) or a movably mounted furniture fitting component of a furniture fitting including
a piston (22) arranged in a fluid chamber (21), wherein a damping action is performed by a relative movement between the fluid chamber (21) and the piston (22) and
a sealing device for sealing the fluid chamber (21), wherein the sealing device has a first abutment element (27) and a second abutment element (28) mounted movably relative to the first abutment element (27) and being configured to seal the fluid chamber (21),and wherein the second abutment element (28) is mounted movably relative to the piston (22), and a sealing element (29) having an outer and an inner sealing lip (31, 32) for sealing the fluid chamber (21), which in a mounted position bear against the piston (22) or a piston rod (17) connected to the piston (22) and/or a housing wall of the fluid chamber (21), and wherein a spring (26) is arranged between the first abutment element (27) and the second abutment element (28),
a carcass-side fitment portion (5) and
a hinge cup (6) hingedly connected thereto for fixing furniture parts (2, 3), **characterized in that**
the furniture damper (9) is arranged substantially completely within the hinge cup (6) in a mounted position,
or when the fitment portion (5) and the hinge cup (6) are hingedly connected together, the furniture damper (9) is inserted from above into the hinge cup (6) and arranged within the hinge cup (6), wherein the furniture damper (9) is connectable to the hinge cup (6) by co-operating fixing parts (11a, 11b), and
that the spring (26) is compressible by a relative movement between the first abutment element (27) and the second abutment element (28) to a cross-sectional thickness of the spring (26).

2. A furniture hinge as set forth in claim 1, **characterized in that** the spring (26) is a conical spiral spring.

3. A furniture hinge as set forth in claim 1 or 2, **characterized in that** the spring (26) has a central opening in which the piston (22) or a piston rod (17) connected to the piston is arranged.

4. A furniture hinge as set forth in one of the claims 1 to 3, **characterized in that** the first abutment element (27) has a contact surface against which a first end of the spring (26) bears in the mounted condition of the spring (26).

5. A furniture hinge as set forth in one of the claims 1 to 4, **characterized in that** the fluid chamber (21) has an open end, and the first abutment element (27) is formed as a cover plate for closing off the open end of the fluid chamber (21).

6. A furniture hinge as set forth in one of the claims 1 to 5, **characterized in that** the second abutment element (28) has a contact surface against which a second end of the spring (26) bears in the mounted condition of the spring (26).

7. A furniture hinge as set forth in one of the claims 1 to 6, **characterized in that** the piston (22) assumes at first end position at an end of a damping stroke relative to the fluid chamber (21), and a position of the piston (22) relative to the fluid chamber (21) is displaceable by the spring (26) into a readiness position remote from the end position.

## Revendications

1. Charnière de meuble (4) avec :
- un amortisseur pour meuble (9), destiné à l'amortissement d'un mouvement d'une partie de meuble (2, 3) positionnée de manière mobile ou d'un composant de ferrure de meuble d'une ferrure de meuble, lequel composant de ferrure de meuble est positionné de manière mobile, avec
- un piston (22) disposé dans une chambre de fluide (21), un effet d'amortissement ayant lieu par l'intermédiaire d'un mouvement relatif entre la chambre de fluide (21) et le piston (22) et avec
- une garniture d'étanchéité destinée à l'étanchéification de la chambre de fluide (21), la garniture d'étanchéité présentant un premier élément de butée (27) et un deuxième élément de butée (28), ce dernier étant conçu en vue de l'étanchéification de la chambre de fluide (21) et étant positionné de manière mobile par rapport au premier élément de butée (27), et le deuxième élément de butée (28) étant positionné de manière mobile par rapport au piston (22) et présentant un élément d'étanchéité (29) avec une lèvre d'étanchéité (31, 32) extérieure et intérieure, lesquelles sont destinées à l'étanchéification de la chambre de fluide (21) et lesquelles sont aménagées, à l'état de montage, au niveau du piston (22), respectivement au niveau d'une tige de piston (17) raccordée au piston (22) et/ou au niveau de la paroi du boîtier de la chambre de fluide (21), et un ressort (26) étant disposé entre le premier élément de butée (27) et le deuxième élément de butée (28),
- une pièce de butée (5) située du côté du corps du meuble et
- une cuvette de charnière (6), laquelle est reliée de manière articulée à la charnière de meuble et est destinée à la fixation des parties de meuble (2, 3),
**caractérisée en ce que**,
l'amortisseur pour meuble (9) est, en position de montage, disposé pour l'essentiel intégralement à l'intérieur de la cuvette de charnière (6) ou, lorsque la pièce de butée (5) et la cuvette de charnière (6) sont déjà reliées l'une à l'autre de manière articulée, peut être mis en place dans la cuvette de charnière (6) depuis le dessus et peut être disposé à l'intérieur de la cuvette de charnière (6), l'amortisseur pour meuble (9) pouvant être relié solidairement à la cuvette de charnière (6) dans cette position de montage par l'intermédiaire de moyens de fixation (11a, 11 b) en interaction, et **caractérisée en ce que** le ressort (26) est compressible, ce jusqu'à la force maximale correspondant à la section du ressort (26), par l'intermédiaire du mouvement relatif du premier élément de butée (27) et du deuxième élément de butée (28).

2. Charnière de meuble selon la revendication 1, **caractérisée en ce que** le ressort (26) est un ressort conique.

3. Charnière de meuble selon la revendication 1 ou 2, **caractérisée en ce que** le ressort (26) présente une ouverture centrale dans laquelle est disposé(e) le piston (22) ou une tige de piston (17) reliée au piston (22).

4. Charnière de meuble selon l'une des revendications 1 à 3, **caractérisée en ce que** le premier élément de butée (27) présente une surface de contact au niveau de laquelle est aménagée une première extrémité du ressort (26), à l'état de montage du ressort (26).

5. Charnière de meuble selon l'une des revendications 1 à 4, **caractérisée en ce que** la chambre de fluide (21) présente une extrémité ouverte et le premier élément de butée (27) se présente sous la forme d'une plaque de recouvrement destinée à l'obturation de l'extrémité ouverte de la chambre de fluide (21).

6. Charnière de meuble selon l'une des revendications 1 à 5, **caractérisée en ce que** le deuxième élément de butée (28) présente une surface de contact au niveau de laquelle est aménagée une deuxième extrémité du ressort (26), à l'état de montage du ressort (26).

7. Charnière de meuble selon l'une des revendications 1 à 6, **caractérisée en ce que** le piston (22) adopte une première position de fin de course à la fin de la course d'amortissement, par rapport à la chambre de fluide (21), et **en ce que** le ressort (26) permet de régler la position relative du piston (22) par rapport à la chambre de fluide (21) dans une position d'attente distante de la position de fin de course.
